# EUROPÄISCHE PATENTANMELDUNG

(11) **EP 2 093 867 A1**
(43) Veröffentlichungstag der Anmeldung: **26.08.2009**
(21) Anmeldenummer: 08151860.7
(22) Anmeldetag: 25.02.2008
(51) Int. Cl.: H02K 11/00, H02K 1/04, H02P 6/00

(54) **Statorkondensator**

(71) Anmelder: ebm-papst Mulfingen GmbH & Co. KG, 74673 Mulfingen (DE)
(72) Erfinder: Wystup, Ralph, 74653 Künzelsau (DE); Lipp, Helmut, 74677 Dörzbach-Hohebach (DE)
(74) Vertreter: Patentanwälte Dr. Solf & Zapf

(57) **Zusammenfassung**

Die vorliegende Erfindung betrifft einen Stator für einen Elektromotor, insbesondere elektronisch-kommutierten Elektromotor aus einem aus parallel zueinander angeordneten Blechlamellen (2) gebildeten Blechpaket (1) zum Aufbringen von Motorwicklungen (6). Die das Blechpaket (1) bildenden nebeneinander angeordneten einzelnen Blechlamellen (2) sind derart zueinander mittels einer Isolation (3) versehen angeordnet und in das Paket zusammengefasst, dass keine elektrisch leitende Verbindung zumindest bei einer Mehrzahl der Blechlamellen (2) untereinander vorhanden ist, so dass zwischen den Blechlamellen (2) eine Kondensatorstruktur (4) ausgebildet ist. Ferner betrifft die Erfindung einen elektronisch-kommutierter Elektromotor (EC-Motor) mit einem Rotor und einem erfindungsgemäßen Stator (1) und auf dem Stator (1) angeordneten Motorwicklungen (6).

## Beschreibung

Die vorliegende Erfindung betrifft einen Stator für einen Elektromotor, insbesondere einen elektronisch-kommutierten Elektromotor, vorzugsweise einem elektronisch-kommutierten Außenläufermotor, bestehend aus einem Stator-Blechpaket zum Aufbringen von Motorwicklungen.

Weiterhin bezieht sich die Erfindung auf einen elektronisch-kommutierten Elektromotor (EC-Motor) mit einem Rotor und einem Stator, welcher insbesondere eine Kommutierungselektronik mit einem Gleichrichter aufweist, welcher eine Netz-Wechselspannung in eine pulsierende Gleichspannung zur Speisung eines Zwischenkreises liefert, wobei die Zwischenkreisspannung eine Steuerelektronik und eine Leistungselektronik speist, wobei die Leistungselektronik die Motorwicklungen ansteuert.

Um bei elektronisch-kommutierten Elektromotoren, welche aus ein- oder mehrphasigen Netzen gespeist werden, eine hohe Konstanz des inneren Drehmomentes zu erlangen, ist es notwendig, eine nahezu konstante Zwischenkreisspannung bereitzustellen. Da die gleichgerichtete Netzspannung dem Betrag der Netzspannung entspricht, treten Intervalle auf, in denen die gleichgerichtete Netzspannung bis auf 0 Volt heruntergeht. An einer Ohm'schen Last, wie der Zwischenkreis von dem Gleichrichter aus gesehen wird, würde diese Spannung zu einer stark pulsierenden Wirkleistung führen. Dies führt wiederum zum Pulsieren des inneren Drehmomentes des Motors. Da die gleichgerichtete Netzspannung ohne Stützmaßnahmen bis auf 0 absinkt, können Schwankungen im Drehmoment auch nicht durch regelungstechnische Maßnahmen ausgeglichen werden, wenn eine konstante Wellenleistung vorgegeben wird. Die Spannungseinbrüche der gleichgerichteten Netzspannung können vermindert werden, indem im Zwischenkreis z. B. Elektrolytkondensatoren eingebaut werden. Im Zeitraum zu geringer Spannung liefern sie nun die Energie, um ein konstantes inneres Motordrehmoment aufrecht zu erhalten. Derartige Elektrolytkondensatoren benötigen aber einen nicht unwesentlichen Bauraum und stellen zusätzliche Materialkosten dar und begrenzen in der Regel die Lebensdauer der Elektronik.

Der vorliegenden Erfindung liegt die Aufgabe zu Grunde, die konventionellen Kondensatoren, insbesondere Elektrolytkondensatoren zur Energiespeicherung weitgehend zu ersetzen, um Bauraum zu sparen, um die Lebensdauer der Elektronik zu erhöhen und um Materialkosten bei einem weiterhin konstanten inneren Motordrehmoment zu senken.

Erfindungsgemäß wird dies dadurch erreicht, dass die das Blechpaket des Stators bildenden nebeneinander angeordneten einzelnen Blechlamellen derart zueinander mittels einer Isolation versehen angeordnet und in das Paket zusammengefasst sind, dass keine elektrisch leitende Verbindung zumindest bei einer Mehrzahl der Blechlamellen untereinander vorhanden ist, so dass zwischen den Blechlamellen eine Kondensatorstruktur ausgebildet ist. Vorzugsweise wird zwischen allen Blechlamellen eine Kondensatorstruktur geschaffen. Erfindungsgemäß kann ein elektronisch-kommutierter Elektromotor (EC-Motor) mit einem Rotor und einem Stator gemäß der erfindungsgemäßen Ausgestaltung der eingangs genannten Art geschaffen werden, bei dem der an den Netzgleichrichter ausgangsseitig angeschlossene Glättungskondensator zumindest teilweise durch die erfindungsgemäße Kondensatorstruktur des Stator-Blechpaketes gebildet wird. Durch eine geeignete Verschaltung der einzelnen Kondensatorstrukturen, z. B. einer Parallelschaltung oder zur Erhöhung der Spannungsfestigkeit der Parallelschaltung von Kondensatorstrukturgruppen und einer weiterhin möglichen Reihenschaltung dieser Gruppen können relativ große Kapazitäten aufgebaut werden. Der Vorteil der erfindungsgemäßen Kondensatorstrukturen ist, dass infolge der niederfrequenten Wechselfelder so gut wie keine gegenseitige Beeinflussung des elektrischen und der magnetischen Felder stattfindet. Die elektrische Isolierung der Blechlamellen ist gegenüber der Isolation der bekannten Statorblechlamellen derart durchzuführen, dass eine erhöhte Durchschlagspannung, die minimal der Zwischenkreisspannung entspricht, bei gleichzeitig geringem Abstand der Blechlamellen gegeben ist. Die Kapazität der erfindungsgemäßen Kondensatorstrukturen kann durch eine Oberflächenbeschichtung der Blechlamellen in Verbindung mit beispielsweise einer Beschichtung mit festem Braunsteinelektrolyt erreicht werden.

An Hand des in den beiliegenden Zeichnungen dargestellten Ausführungsbeispiels wird die Erfindung näher erläutert. Es zeigen:
- Fig.1: eine Darstellung eines schematisierten Aufbaus eines erfindungsgemäßen Stators und
- Fig. 2: ein Prinzipschaltbild eines erfindungsgemäßen Elektromotors.

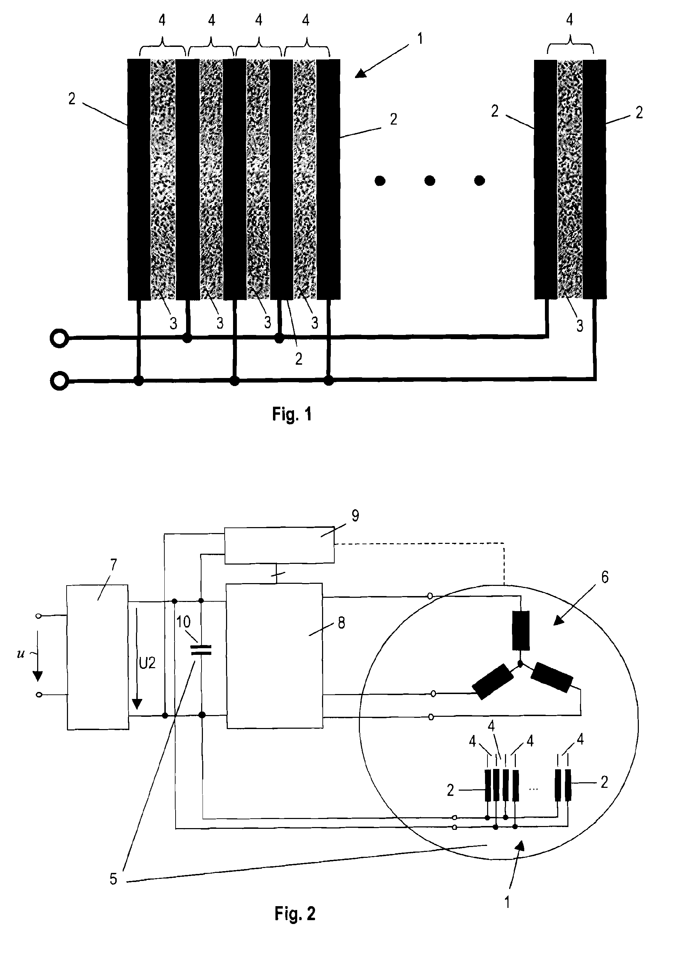

Wie in Fig. 1 dargestellt ist, besteht ein erfindungsgemäßer Stator aus einem Blechpaket 1, das aus einzelnen parallel zueinander angeordneten einzelnen Blechlamellen 2 gebildet wird, zwischen denen jeweils eine Isolationsschicht 3 angeordnet ist. Hierbei bilden jeweils zwei durch eine Isolationsschicht 3 voneinander getrennte Blechlamellen 2 eine erfindungsgemäße Kondensatorstruktur 4. Die Anzahl der vorhandenen Blechlamellen 2 und damit die Dicke des Statorblechpaketes 1 hängt von der jeweiligen Baugröße des Elektromotors ab. In Fig. 1 ist eine Parallelschaltung der einzelnen Kondensatorstrukturen dargestellt.

Wie in Fig. 2 dargestellt ist, besteht ein erfindungsgemäßer Elektromotor, insbesondere ein elektronisch-kommutierter Elektromotor (EC-Motor) aus einem Stator 1, bestehend aus einem Statorblechpaket 2 und Motorwicklungen 6 sowie einem nicht dargestellten Rotor. An einen Netz-Gleichrichter 7 ist eine Netz-Wechselspannung U angelegt, die eine pulsierende Gleichspannung als Ausgangsspannung erzeugt. Diese pulsierende Gleichspannung wird mit einer Kapazität 5 derart geglättet, dass am Eingang eines Wechselrichters 8 eine etwa konstante Gleichspannung U2 anliegt. Diese Zwischenkreisspannung U2 speist eine Steuerelektronik 9 und eine Leistungselektronik des Wechselrichters 8, die die Motorwicklungen 6 des Elektromotors ansteuert. Die Glättungskapazität 5 wird erfindungsgemäß von mindestens einer Kondensatorstruktur 4, wie in Fig. 1 beschrieben, gebildet, die im dargestellten Ausführungsbeispiel mit einem Folienkondensator 10, der mit den Kondensatorstrukturen 4 des Statorblechpaketes 1 parallel geschaltet ist. Es liegt ebenfalls im Rahmen der Erfindung, wenn die Kondensatorstrukturen 4 des Statorblechpaketes 1 auch alleine die Glättungskapazität 5 bildet. An Stelle der dargestellten Parallelschaltung der Kondensatorstrukturen 4 und des Kondensators 10 kann auch eine Reihenschaltung derselben oder eine Mischung aus Reihen- und Parallelschaltung vorgesehen sein.

Die Erfindung ist nicht auf das dargestellte Ausführungsbeispiel beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Stator für einen Elektromotor, insbesondere elektronisch-kommutierten Elektromotor aus einem aus parallel zueinander angeordneten Blechlamellen (2) gebildeten Blechpaket (1) zum Aufbringen von Motorwicklungen (6),
**dadurch gekennzeichnet, dass** diedasBlechpaket(1)bildenden nebeneinander angeordneten einzelnen Blechlamellen (2) derart zueinander mittels einer Isolation (3) versehen angeordnet und in das Paket zusammengefasst sind, dass keine elektrisch leitende Verbindung zumindest bei einer Mehrzahl der Blechlamellen (2) untereinander vorhanden ist, so dass zwischen den Blechlamellen (2) eine Kondensatorstruktur (4) ausgebildet ist.

2. Stator nach Anspruch 1,
**dadurch gekennzeichnet, dass** mehrere aus zwei gegeneinander isolierten Blechlamellen (2) gebildeten Kondensatorstrukturen (4) parallel und/oder in Reihe geschaltet sind.

3. Stator nach Anspruch 1 oder 2,
**dadurch gekennzeichnet, dass** Gruppen von Kondensatorstrukturen (4) parallel und die parallel geschalteten Gruppen in Reihe geschaltet sind.

4. Stator nach einem der Ansprüche 1 bis 3,
**dadurch gekennzeichnet, dass** zur Erhöhung der Kapazität der Kondensatorstrukturen (4) die Blechlamellengröße möglichst groß und/oder der Abstand der Blechlamellen (2) möglichst klein ausgebildet sind.

5. Stator nach einem der Ansprüche 1 bis 4,
**dadurch gekennzeichnet, dass** die Blechlamellen (2) mit einer ihre Oberfläche vergrößernden Beschichtung versehen sind.

6. Stator nach einem der Ansprüche 1 bis 5,
**dadurch gekennzeichnet, dass** die Blechlamellen (2) beschichtet sind und ein fester Elektrolyt, beispielsweise Braunstein, zwischen den beschichteten Blechen aufgetragen ist.

7. Elektronisch-kommutierter Elektromotor (EC-Motor) mit einem Rotor und einem Stator (1) gemäß den Ansprüchen 1 bis 6 und auf dem Stator (1) angeordneten Motorwicklungen (6).

8. EC-Motor nach Anspruch 7, mit einem Netz-Gleichrichter (7), der eine Netz-Wechselspannung (U) in eine pulsierende Gleichspannung gleichrichtet, die an einer Glättungskapazität (5) zu einer Zwischenkreisspannung (U2) geglättet wird, die an einem Wechselrichter (8) und einer Steuerelektronik (9) anliegt, die die Motorwicklungen (6) ansteuern,
**dadurch gekennzeichnet, dass** dieGlättungskapazität(5) zumindest teilweise durch die im Blechpaket (1) des Stators ausgebildeten Kondensatorstrukturen (4) gebildet wird.

9. EC-Motor nach Anspruch 8,
**dadurch gekennzeichnet, dass** dieGlättungskapazität(5)aus der Parallel- und/oder Reihenschaltung der Kondensatorstrukturen (4) des Statorblechpakets (1) und einem Folienkondensator (10) gebildet ist.

10. EC-Motor nach einem der Ansprüche 1 bis 9,
**dadurch gekennzeichnet, dass** derMotoralsAußenläufer-Motor aufgebaut ist.
